# EUROPÄISCHE PATENTSCHRIFT

(11) **EP 3 794 947 B1**
(45) Veröffentlichungstag und Bekanntmachung des Hinweises auf die Patenterteilung: **05.03.2025**
(21) Anmeldenummer: 20191582.4
(22) Anmeldetag: 18.08.2020
(51) Int. Cl.: A22C 15/00

(54) **AUFHÄNGEVORRICHTUNG ZUM TRANSPORTIEREN UND SPREIZEN VON MINDESTENS EINER WÜRSTCHENKETTE UND VERFAHREN**
SUSPENSION DEVICE FOR TRANSPORTING AND SPREADING AT LEAST ONE CHAIN OF SAUSAGES AND METHOD
DISPOSITIF DE SUSPENSION PERMETTANT DE TRANSPORTER ET D'ÉCARTER AU MOINS UNE CHAÎNE DE SAUCISSES ET PROCÉDÉ

(30) Priorität: 17.09.2019 DE 202019105153 U
(43) Veröffentlichungstag der Anmeldung: 24.03.2021
(73) Patentinhaber: VEMAG Maschinenbau GmbH, 27283 Verden/Aller (DE)
(72) Erfinder: Köhler, Sven, 27283 Verden (DE); Hiller, Klaus, 27313 Dörverden (DE)
(74) Vertreter: Eisenführ Speiser

(56) Entgegenhaltungen:
- EP-A1- 1 915 910
- EP-A2- 2 497 367
- US-A- 5 067 620

## Beschreibung

Die Erfindung betrifft eine Aufhängevorrichtung zum Aufhängen und Transportieren von mindestens einer Würstchenkette, umfassend eine Transporteinrichtung zum Transportieren der mindestens einen Würstchenkette, welche mindestens einen mittels einer Führungs- und Antriebseinrichtung entlang einer Bewegungsbahn bewegbaren Aufnahmehaken zum Aufnehmen der Würstchenkette aufweist.

Die Erfindung betrifft weiterhin ein Verfahren zur Spreizung von mindestens einer Würstchenkette mittels einer erfindungsgemäßen Aufhängevorrichtung.

Bei der Würstchenproduktion werden einzelne Würstchen durch Abdrehen eines gefüllten Darms erzeugt. Die so entstandenen Würstchenpaare oder Würstchenketten werden im weiteren Produktionsverlauf einer Aufhängemaschine zugeführt. Hierbei werden die abgedrehten Einschnürstellen von Aufnahmehaken erfasst, sodass auf jedem Aufnahmehaken jeweils ein Würstchenpaar oder eine Würstchenkette positioniert ist. Im Sinne der Erfindung wird unter einer Würstchenkette eine Aneinanderreihung von mindestens zwei Würstchen, also ein Würstchenpaar, oder auch eine Vielzahl von aneinandergereihten Würstchen verstanden; es wird im Folgenden für diese verschiedenen Fälle der Begriff Würstchenkette verwendet. Anschließend wird in der Regel eine Gruppe von aufgehängten Würstchenketten an einen sogenannten Rauchstock übergeben. Hierfür wird der Rauchstock zwischen den Würstchenketten eingefädelt.

Um das Einfädeln des Rauchstocks zu vereinfachen und vor allem auch die benötigte Zeit hierfür zu reduzieren sowie Beschädigungen am Produkt zu vermeiden, ist eine gewisse Spreizung der Würstchenketten von Vorteil. Denn, je größer die Spreizung der Würstchenketten an der Aufhängemaschine ist, desto einfacher ist es, den Rauchstock einzuführen. Herkömmlich wird eine Spreizwirkung an dem Aufnahmehaken direkt erzielt. Mittels einer speziellen, zumeist einer Art dachförmigen Geometrie des Aufnahmehakens bzw. einer Hakenkehle des Aufnahmehakens werden die Würstchenketten bei der Aufhängung direkt unterhalb der Einschnürstelle gespreizt.

Aufgrund der dadurch verbreiterten Hakenkehle ist ein positionsgenaues Erfassen der Einschnürstellen bei der Übergabe der Würstchenketten an die Aufhängemaschine erschwert. Insbesondere Würstchen mit geringem Durchmesser oder unterfüllte Würstchen in Würstchenketten hängen üblicherweise sehr dicht, ohne eine nennenswerte Spreizung aneinander. Um auch bei solchen Würstchenketten die erforderliche Spreizwirkung zu erreichen, wäre eine große und entsprechend breite Hakenkehle notwendig. Solche großen Aufnahmehaken erfordern entsprechend mehr Platz, um die Würstchenketten von den Aufnahmehaken auf den Rauchstock abnehmen zu können. Dies hätte eine geringere Anzahl an Aufnahmehaken pro Längeneinheit und demnach eine geringere Anzahl an Würstchenketten pro Rauchstock zur Folge.

Des Weiteren sind diskontinuierlich arbeitende Systeme zur Spreizung von Würstchenketten bekannt. Eine bewegbare externe Spreizvorrichtung wird zwischen die Würstchenketten eingefahren und anschließend zur Erzielung der Spreizwirkung auseinandergefahren. Der Nachteil eines solchen Systems ist, dass der Produktionsprozess unterbrochen werden müsste. Des Weiteren ist hierfür eine gewisse Vor-Spreizung der Würstchenketten erforderlich, um die Spreizvorrichtung zwischen die Würstchenketten einzuführen.

EP 1 915 910 A1 und US 5 067 620 A zeigen eine Aufhängevorrichtung nach dem Oberbegriff von Anspruch 1.

EP 2 497 367 A2 zeigt eine Aufhängevorrichtung nach dem Oberbegriff von Anspruch 1.

Der Erfindung liegt die Aufgabe zu Grunde, die oben genannten Nachteile zumindest teilweise zu vermindern und eine Aufhängevorrichtung oder -maschine und ein entsprechendes Verfahren bereitzustellen, die eine ausreichende Spreizung von Würstchenketten zuverlässig im Betrieb erreichen, insbesondere zum sicheren Einführen eines Rauchstocks.

Die Erfindung löst die Aufgabe mit einer Aufhängevorrichtung mit den Merkmalen des Anspruchs 1 sowie optional den Unteransprüchen.

Die Aufgabe wird in einem ersten Aspekt von einer Aufhängevorrichtung der eingangs genannten Art gelöst, die eine ortsfest relativ zu der Transporteinrichtung angeordnete Spreizvorrichtung zum Spreizen der Würstchenkette aufweist, welche mindestens ein benachbart zur Bewegungsbahn des Aufnahmehakens angeordnetes Spreizelement aufweist, welches im Betrieb derart auf die von dem Aufnahmehaken getragene Würstchenkette einwirkt, dass die Würstchenkette gespreizt wird.

Die erfindungsgemäß ortsfest angeordnete Spreizvorrichtung hat den Vorteil, dass mit relativ einfachen Mitteln jederzeit auch während des Produktionsbetriebs zuverlässig eine Spreizung der Würstchen oder einer Würstchenkette verwirklicht werden kann. Der laufende Produktionsprozess muss nicht unterbrochen werden. Die von den Aufnahmehaken getragenen Würstchenketten können somit beim Transport entlang der Bewegungsbahn der Transporteinrichtung gespreizt werden. Die Bewegung der hängenden Würstchenketten wird genutzt, um die geforderte Spreizwirkung zu erzielen. Die Aufnahmehaken brauchen vorteilhaft nicht speziell ausgestaltet zu werden mit Blick auf eine Spreizung von Würstchen. Die Spreizvorrichtung ist vorzugsweise an einem Maschinengestell montiert und somit ortsfest angeordnet. Sie kann an unterschiedlichen Orten an dem Maschinengestell positioniert und gegebenenfalls verstellbar sein, im Betrieb ist die Spreizvorrichtung jedoch im Wesentlichen ortsfest und unbeweglich, während die Würstchenkette relativ zur Spreizvorrichtung bewegt wird.

Erfindungsgemäß ist die Führungs- und Antriebseinrichtung für den Aufnahmehaken so ausgebildet, dass dessen Bewegungsbahn zumindest abschnittsweise gekrümmt ist, und sich insbesondere entlang eines Kreisbogenabschnitts erstreckt, wobei die Spreizvorrichtung wenigstens teilweise im Bereich des Kreisbogenabschnitts, insbesondere anschließend an ein Ende des Kreisbogenabschnitts, angeordnet ist zum Führen der Würstchenkette auf die Spreizvorrichtung. Die Schwerkraft der aufgehängten Würstchenkette bewirkt einen sich im Wesentlichen senkrecht unterhalb der Aufnahmehaken, insbesondere unterhalb der Hakenkehle, erstreckenden Spalt zwischen einem ersten Ende der Würstchenkette und einem zweiten Ende der Würstchenkette. Der Spalt wird in vertikaler Richtung an seinem oberen Ende durch die Hakenkehle begrenzt und ist an seinem unteren Ende geöffnet. Definitionsgemäß kann der Spalt je nach Würstchenart und -geometrie unterschiedliche Formen annehmen. Hängende Würstchenketten die entlang einer gekrümmten Bewegungsbahn, insbesondere eines Kreisbogenabschnitts, transportiert werden, sind Fliehkräften ausgesetzt. Aufgrund der Fliehkräfte wird der Spalt in einem Winkel um die Tangente des Kreisbogenabschnitts in eine Richtung außerhalb des Kreisbogenabschnitts abgelenkt. Mittels einer Anordnung der Spreizvorrichtung in Transportrichtung an ein Ende des Kreisbogenabschnitts kann die Führung des Spalts auf die Spreizelemente verbessert werden.

Die Aufgabe wird gemäß einem weiteren Aspekt der Erfindung auch dadurch gelöst bzw. die erfindungsgemäße Aufhängevorrichtung wird dadurch vorteilhaft weitergebildet, dass im Bereich des gekrümmten Abschnitts, insbesondere des Kreisbogenabschnitts, insbesondere vertikal unterhalb der Transporteinrichtung, ein Auffangelement oder -blech angeordnet ist, welches im Betrieb mindestens ein Würstchen oder einen Teil der Würstchenkette an einer Auslenkung aufgrund von Fliehkräften hindert. Dadurch wird in vorteilhafter Weise erreicht, dass insbesondere ein innerhalb des Kreisbogenabschnitts innen hängender Teil der Würstchenkette daran gehindert wird, aufgrund von Fliehkräften, die aufgrund der gekrümmten Bewegungsbahn entstehen, nach außen ausgelenkt zu werden. Infolgedessen beginnt bereits eine Spreizung der Würstchenkette, da der außen hängende Teil der Würstchenkette aufgrund der Fliehkräfte ausgelenkt wird. Demzufolge ergibt sich auch eine besonders bevorzugte positive Zusammenwirkung mit einer erfindungsgemäßen Spreizvorrichtung.

Erfindungsgemäß ist, dass das Auffangelement und die Transporteinrichtung derart zusammenwirken, dass ein vertikaler Abstand zwischen Auffangelement und Transporteinrichtung eingestellt wird, wobei der vertikale Abstand so gewählt ist, dass ein erstes freies Ende einer Würstchenkette in eine Transportrichtung entlang der Bewegungsbahn, insbesondere eines innerhalb des Kreisbogenabschnitts innen hängenden Würstchens, einer Würstchenkette zumindest abschnittsweise eine reib- oder formschlüssige Verbindung mit dem Auffangelement eingeht, und ein zweites freies Ende einer Würstchenkette in der Transportrichtung entlang der Bewegungsbahn, insbesondere eines innerhalb des Kreisbogenabschnitts außen hängenden Würstchens, einer Würstchenkette frei bewegbar ist. Das erfindungsgemäße Auffangelement oder -blech optimiert die Führung des Spaltes, der sich zwischen den Würstchenketten erstreckt, auf die Spreizvorrichtung. Durch ein zeitweises Aufhalten der Bewegung eines freien Endes einer Würstchenkette mittels des Auffangelements, ändert sich die Spaltgeometrie abschnittsweise von einer im Wesentlichen stabförmigen Spaltgeometrie zu einer V-förmig aufgeweiteten Spaltgeometrie. Die Spreizung der Würstchenkette erfolgt somit indirekt über den Einfluss der auf die Würstchenkette wirkenden Bewegungskräfte. Dadurch wird das Führen des Spalts auf ein erstes Spreizelement reproduzierbar verbessert.

In einer weiteren bevorzugten Ausführungsform ist die Spreizvorrichtung im Wesentlichen unterhalb der Bewegungsbahn des Aufnahmehakens angeordnet. Eine unterhalb der hängenden Würstchenkette angeordnete Spreizvorrichtung hat den Vorteil, dass die Spreizvorrichtung unabhängig von der Länge der Würstchenkette und der Art der Würstchen eingerichtet ist. Aufgrund der Schwerkraft, die auf die aufgehängten Würstchenketten wirkt, erstreckt sich der Spalt entsprechend unterhalb der Aufnahmehaken, insbesondere im Wesentlichen senkrecht unterhalb der Hakenkehle.

Besonders bevorzugt ist das mindestens eine Spreizelement wenigstens teilweise gekrümmt. Der sich beim Transport entlang der Bewegungsbahn bewegende Spalt der Würstchenkette wird in Richtung auf die Spreizvorrichtung, insbesondere auf die Spreizelemente, geführt zum Vergrößern der Spaltbreite, also zum Spreizen der Würstchenkette. Je nach Anordnung und Form der Spreizelemente ist die Spaltgeometrie somit während des Transports der Würstchenketten beeinflussbar. Ein gekrümmtes Spreizelement hat den Vorteil, dass die Spreizung über eine definierte Krümmung der Spreizelemente erfolgen kann, wodurch die Spaltgeometrie, insbesondere die Spaltbreite, relativ zu der Bewegungsbahn bestimmbar ist. Des Weiteren ist durch eine Positionsveränderung der Spreizelemente innerhalb des Spalts zwischen den Würstchenketten die Spreizwirkung der Spreizelemente beeinflussbar und optimierbar. Die Position der Spreizelemente innerhalb des Spalts kann mithilfe eines gekrümmten Verlaufs der Spreizelemente verändert werden.

Gemäß einer bevorzugten Weiterbildung umfasst die Spreizvorrichtung mehrere stab- oder schienenförmige Spreizelemente, wobei ein erstes Spreizelement mittels eines Verbindungselementes in eine Transportrichtung vor einem zweiten und einem dritten Spreizelement angeordnet ist, wobei das erste Spreizelement zumindest abschnittsweise parallel zu der Bewegungsbahn angeordnet ist. Stab-, stangen- oder schienenförmige Spreizelemente sind aufgrund ihrer einfachen Bauweise kostengünstig in herkömmliche Systeme integrierbar. Ein weiterer Vorteil ergibt sich, vor allem für stab- oder stangenförmige Spreizelemente, aufgrund deren simpler Geometrie, wodurch die Spreizelemente leicht zu reinigen sind. Eine einfache Reinigung von Vorrichtungs- oder Maschinenelementen ist insbesondere in der Lebensmittelindustrie essentiell. Neben der einfachen Reinigung der einzelnen Elemente ist auch die einfache Reinigung der gesamten Vorrichtung wichtig. Drei aneinander angeordnete, insbesondere stab- oder stangenförmige, Spreizelemente erfüllen dieses Kriterium aufgrund deren einfacher geometrischer Anordnung.

Vorzugsweise sind mindestens zwei Spreizelemente zumindest abschnittsweise beabstandet zueinander angeordnet, wobei der Abstand in eine Querrichtung, die sich horizontal und orthogonal zu einer Transportrichtung erstreckt, zumindest abschnittweise in Transportrichtung zunimmt. Zwei Spreizelemente, die in Querrichtung zueinander beabstandet angeordnet sind, bewirken zumindest abschnittsweise eine Spreizung der Würstchenkette. Eine Zunahme in Transportrichtung des Abstands der Spreizelemente ermöglicht eine streckenabhängige Spreizung der Würstchenkette entlang der Bewegungsbahn. Dies kann vorteilhaft sein für unterschiedliche Würstchendicken oder eine unterschiedliche Anzahl an Würstchenketten entlang der Bewegungsbahn.

Ferner ist bevorzugt, dass der Abstand der Spreizelemente in Querrichtung zumindest abschnittweise einstellbar ist. Ein variabler Abstand der Spreizelemente in Querrichtung ist vorteilhaft für unterschiedliche Würstchengeometrien. Beispielsweise benötigen lange und dünne Würstchen einer Würstchenkette und/oder lange Würstchenketten eine größere Spreizung zum Einführen eines Rauchstocks als kleine und dicke Würstchen einer Würstchenkette und/oder kurze Würstchenketten. Ein Mindestabstand der Spreizelemente an der Position, an der ein Rauchstock in die gespreizten Würstchenketten eingeführt werden soll bzw. an der die gespreizten Würstchenketten auf den Rauchstock geführt werden sollen, wird über eine Breite des Rauchstocks definiert. Der Abstand der Spreizelemente in Querrichtung ist zumindest abschnittsweise größer als die Breite des Rauchstocks.

Weiterhin ist bevorzugt, dass die Querschnittsflächen der Spreizelemente im Wesentlichen rund sind, oder im Wesentlichen ein Vieleck, insbesondere ein Rechteck oder ein Dreieck, bilden, wobei insbesondere ein oder mehrere freie Enden der Spreizelemente mit einem Abschlusselement in Form einer Spitze oder einer Halbkugel abschließen. Die Querschnittsflächen der Spreizelemente haben ebenfalls einen Einfluss auf eine optimierte Spreizung der Würstchenketten. Es ist wichtig, dass die Würstchen einer Würstchenkette im Produktionsprozess nicht beschädigt werden. Bei der erfindungsgemäßen Aufhängevorrichtung werden die Würstchenketten entlang der Spreizelemente entlanggeführt, wobei Reibungskräfte zwischen den Würstchen und den Spreizelementen entstehen. Es ist demnach sinnvoll, je nach Würstchenart und Würstchengeometrie eine angepasste Querschnittsfläche der Spreizelemente bereitzustellen, um somit die Kontaktfläche zwischen den Würstchen und den Spreizelementen zu optimieren.

In einer weiteren bevorzugten Ausführungsform ist die Spreizvorrichtung relativ zu dem Aufnahmehaken zumindest abschnittsweise vertikal beabstandet, wobei der vertikale Abstand variabel einstellbar ist, bevorzugt in einem Bereich zwischen 0 mm und 300 mm, besonders bevorzugt in einem Bereich von 10 mm bis 100 mm. Ein flexibler Einsatz einer erfindungsgemäßen Aufhängevorrichtung mit Spreizvorrichtung ist erforderlich, um unterschiedliche Kundenbedarfe erfüllen zu können. Das heißt, je nach Würstchengeometrie und/oder Würstchenkettenlänge ist eine unterschiedliche Spreizwirkung erforderlich zum optimierten Einführen eines Rauchstocks. Hierfür ist der vertikale Abstand der Spreizvorrichtung zu den Aufnahmehaken eine wichtige Größe zur Beeinflussung der Spreizwirkung.

In einer weiteren bevorzugten Ausführungsform ist die Führungs- und Antriebseinrichtung für den Aufnahmehaken so ausgebildet ist, dass dessen Bewegungsbahn zumindest abschnittsweise einen Höhenunterschied aufweist mit einem ersten Höhenniveau und einem zweiten Höhenniveau, wobei vorzugsweise der Abstand zwischen dem ersten Höhenniveau zu dem zweiten Höhenniveau in einem Bereich zwischen 50 mm und 500 mm liegt, besonders bevorzugt in einem Bereich von 50 mm bis 20 mm. Die Würstchenketten werden vorzugsweise an einer Spaltposition knapp unterhalb der Hakenkehle auf ein erstes Spreizelement geführt, da an dieser Position die Vorspreizung der Würstchenkette am größten ist. Des Weiteren ist an dieser Spaltposition die Bewegungsfreiheit der Würstchenkette gering, aufgrund der Nähe zu der Aufhängung an der Hakenkehle. Eine geringe Bewegungsfreiheit führt zu geringen Toleranzen, welche vorteilhaft für einen stabilen Produktionsprozess sind. Zur Erzielung einer optimierten Spreizwirkung, ist es sinnvoll, die Spreizelemente anschließend zu einer Position im mittleren Bereich des Spalts zu leiten. Dies wird in dem erfindungsgemäßen Ausführungsbeispiel durch Überführen der Bewegungsbahn auf ein zweites Höhenniveau auf einfache Weise realisiert. Zusätzlich ist das Höhenniveau der Spreizvorrichtung ebenfalls mit einem ersten und einem zweiten Höhenniveau einstellbar. Es gibt somit mehrere Variablen zum Einstellen des vertikalen Abstands zwischen den Hakenkehlen und der Spreizvorrichtung.

Weiterhin ist bevorzugt, dass zumindest ein Teil der Spreizvorrichtung in eine Transportrichtung verstellbar und in verschiedenen Positionen feststellbar ist. Je nach Würstchenart und -geometrie wirken unterschiedliche Bewegungskräfte auf die Würstchenkette. Zum optimalen Führen des Spaltes der Würstchenkette auf die Spreizvorrichtung entlang der Bewegungsbahn ist eine genaue Positionseinstellung in horizontaler und vertikaler Richtung wichtig zur Erzielung einer optimierten Spreizwirkung.

Ferner ist bevorzugt, dass die Spreizvorrichtung mit einer Rauchstock-Führungseinrichtung zum Führen eines Rauchstocks zusammenwirkt, wobei die Rauchstock-Führungseinrichtung benachbart zu der Spreizvorrichtung angeordnet ist. Eine Rauchstock-Führungseinrichtung zum Führen eines Rauchstocks ist vorteilhaft, insbesondere bei langen Rauchstöcken, um den Rauchstock gezielt an der Spaltposition der Würstchenketten mit maximaler Spreizung einführen zu können. Dementsprechend ist erfindungsgemäß vorgesehen, dass die Position der Rauchstock-Führungseinrichtung für den Rauchstock anpassbar ist, je nach Einstellung der Abstände in horizontaler und vertikaler Richtung der Spreizelemente der Spreizvorrichtung.

Vorzugsweise ist die Spreizvorrichtung an eine Zuführfördervorrichtung gekoppelt, zum automatischen Zuführen eines Rauchstocks in die Spreizvorrichtung, insbesondere entlang der Rauchstock-Führungseinrichtung. Um Zeit und Personal einzusparen, kann eine automatische Zuführfördervorrichtung zum Zuführen eines Rauchstocks an die Spreizvorrichtung gekoppelt werden.

Gemäß einem weiteren Aspekt der Erfindung wird die eingangs genannte Aufgabe durch ein Verfahren zur Spreizung von mindestens einer Würstchenkette mittels einer erfindungsgemäßen Aufhängevorrichtung gelöst.

Hinsichtlich der Vorteile des erfindungsgemäßen Verfahrens und seiner Ausführungsformen wird auf die vorstehenden Erläuterungen der erfindungsgemäßen Spreizvorrichtung verwiesen.

Die Erfindung wird nachstehend anhand eines bevorzugten Ausführungsbeispiels einer Aufhängevorrichtung sowie eines Verfahrens anhand der Figuren beschrieben. Es zeigen:
- Figur 1: eine perspektivische Ansicht einer Aufhängevorrichtung
- Figur 2: eine Seitenansicht der Aufhängevorrichtung
- Figur 3: eine Vorderansicht der Aufhängevorrichtung
- Figur 4: eine Hinteransicht der Aufhängevorrichtung
- Figur 5: eine Draufsicht der Aufhängevorrichtung
- Figur 6: eine perspektivische Ansicht eines zweiten Ausführungsbeispiels der Aufhängevorrichtung
- Figur 7: eine Vorderansicht der Aufhängevorrichtung gemäß Figur 6

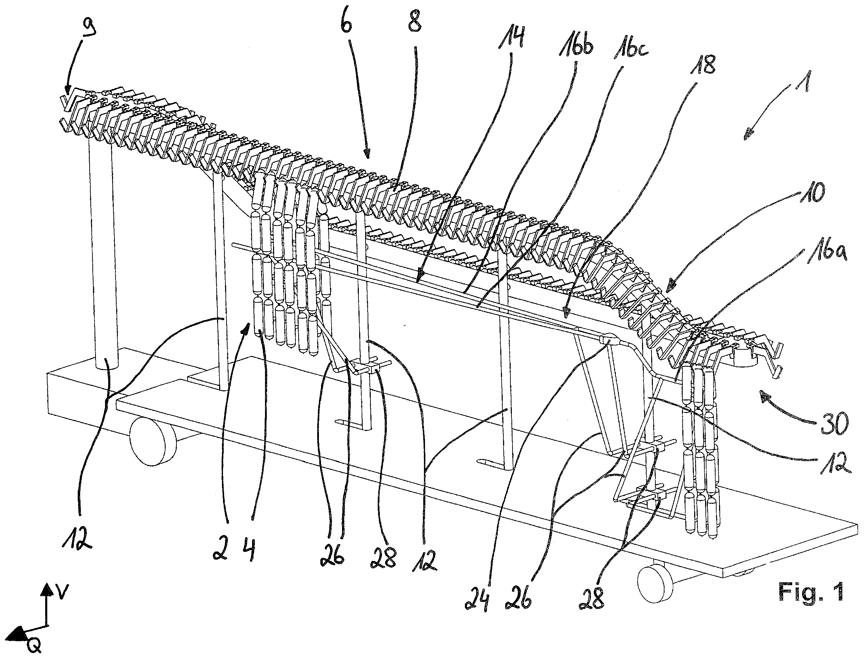

Figur 1 zeigt eine erfindungsgemäße Aufhängevorrichtung oder -maschine 1 zum Transportieren einer Vielzahl von Würstchenketten 2. Die Aufhängevorrichtung 1 weist für den Transport eine an einem Maschinengestell angeordnete Transporteinrichtung 6 auf, die mit einer Vielzahl von Aufnahmehaken 8 ausgestattet ist. Die Aufnahmehaken 8 sind mittels der einen Antrieb aufweisenden Transporteinrichtung 6 entlang einer Bewegungsbahn 10 bewegbar; sie sind beispielsweise an einer umlaufenden, von dem Antrieb bewegbaren Kette oder einem Riemen oder Band befestigt und entlang einer geführten Bewegungsbahn 10 bewegbar. In dem erfindungsgemäßen Ausführungsbeispiel bildet die Bewegungsbahn 10 der Transporteinrichtung 6 einen geschlossenen Kreislauf. Als erfindungsgemäß können auch andere Formen der Bewegungsbahn 10 betrachtet werden, einschließlich auch Bewegungsbahnen 10, die keinen geschlossenen Kreislauf bilden. Die Aufnahmehaken 8 sind entlang der Bewegungsbahn 10 in Transportrichtung beabstandet zueinander angeordnet. Die Aufnahmehaken 8 weisen eine Hakenkehle 9 auf. Die Hakenkehle 9 ist dazu eingerichtet, eine Würstchenkette 2 an einer Einschnürstelle aufzunehmen. Es ist jeweils ein Aufnahmehaken 8 dazu eingerichtet, jeweils eine Würstchenkette 2 aufzunehmen. Entlang der Bewegungsbahn 10 können somit mithilfe der Aufnahmehaken 8 eine Vielzahl von Würstchenketten 2 transportiert werden.

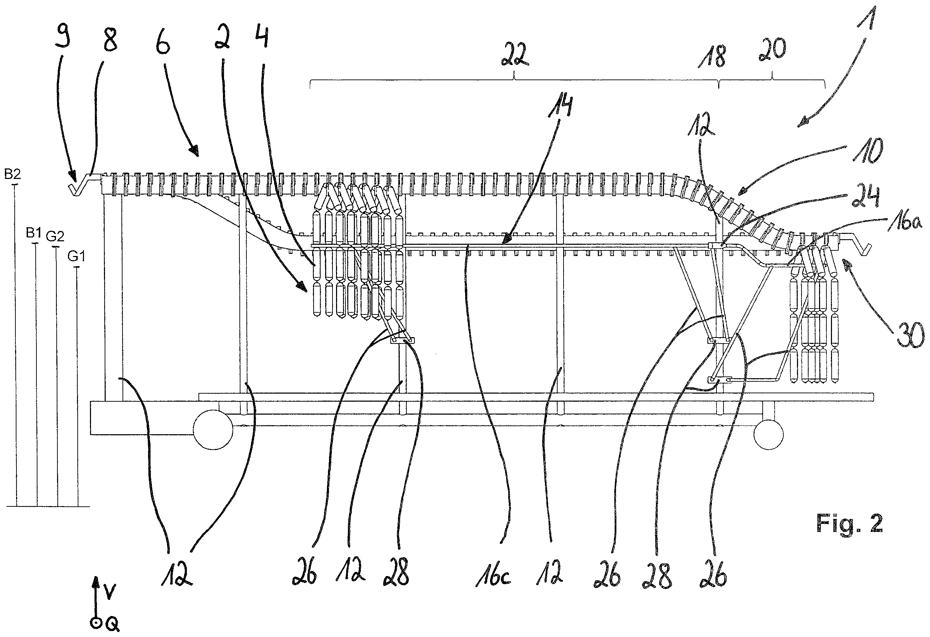

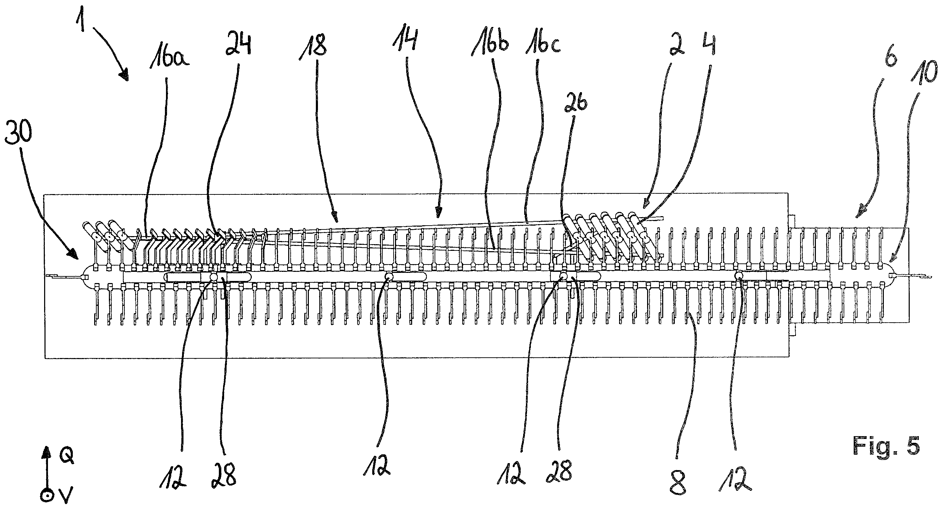

Figuren 2 bis 5 zeigen die Bewegungsbahn 10 der Aufnahmehaken 8 der Transporteinrichtung 6, die auf einer Vielzahl von Stützen 12 gelagert ist, die Teil eines Maschinengestells sind. An den Stützen 12 der Transporteinrichtung 6 ist eine Spreizvorrichtung 14 angeordnet. Die Spreizvorrichtung 14 ist an dem Maschinengestell montiert und gelagert und somit ortsfest angeordnet. Sie kann an unterschiedlichen Orten an dem Maschinengestell positioniert und gegebenenfalls verstellbar sein, im Betrieb ist die Spreizvorrichtung 14 jedoch im Wesentlichen ortsfest und unbeweglich, während die Würstchenkette 2 relativ zur Spreizvorrichtung 14 bewegt wird.

Die Spreizvorrichtung 14 weist mehrere Spreizelemente 16 auf, welche im Betrieb mit den Würstchen 4 der Würstchenkette 2 wenigstens teilweise in Kontakt kommen und mit diesen derart zusammenwirken, dass die Würstchen 4 der Würstchenkette 2 relativ zueinander ihre Position ändern und aufgespreizt werden. Die Spreizelemente 16 sind derart angeordnet, dass sie ein in Fig. 1 gut erkennbares gabelförmiges Element 18 bilden mit einem Gabelstiel 20 und einem Gabelkopf 22. Das gabelförmige Element 18 ist vertikal beabstandet unterhalb von den Aufnahmehaken 8, insbesondere vertikal beabstandet unterhalb einer Hakenkehle 9 der Aufnahmehaken 8, angeordnet. Das gabelförmige Element 18 ist relativ zu der Transporteinrichtung 6 derart angeordnet, dass die Würstchenketten 2 entlang der Bewegungsbahn 10 in Transportrichtung zunächst den Gabelstiel 20, insbesondere ein erstes Spreizelement 16a, und nachfolgend den Gabelkopf 22, insbesondere ein zweites und ein drittes Spreizelement 16b und 16c, passieren. Der Gabelkopf 22, insbesondere das zweite und das dritte Spreizelement 16b und 16c, ist mit dem Gabelstiel 20, insbesondere dem ersten Spreizelement 16a, über ein Verbindungselement 24 verbunden.

Der Gabelkopf 22 weist vorzugsweise zwei beabstandete stabförmige Spreizelemente 16b und 16c auf. Anstelle von stabförmigen Spreizelementen 16 können auch stangenförmige, plattenförmige oder schienenförmige Elemente zum Spreizen der Würstchenketten 2 verwendet werden. Die Spreizelemente 16b und 16c des Gabelkopfes 22 sind im Ausführungsbeispiel in Querrichtung Q beabstandet zueinander angeordnet. Die Querrichtung Q erstreckt sich orthogonal zu der Transportrichtung in einer horizontalen Ebene. Für die Definition der Transportrichtung soll im erfindungsgemäßen Ausführungsbeispiel der vertikale Richtungsanteil unberücksichtigt bleiben. Der Abstand in Querrichtung Q der Spreizelemente 16 definiert einen Spreizabstand, wobei der Spreizabstand von den äußeren Kanten der Spreizelemente 16 ausgehend bemessen wird.

Von dem Verbindungselement 24 ausgehend laufen die Spreizelemente 16b und 16c V-förmig auseinander, wodurch deren Abstand in Querrichtung Q, insbesondere der Spreizabstand, kontinuierlich zunimmt. Im Sinne der Erfindung sind unterschiedliche Verläufe der Spreizelemente 16b und 16c einsetzbar, um je nach Verlauf eine bedarfsgerechte Spreizung der Würstchenketten 2 entlang der Bewegungsbahn 10 zu erhalten. Beispielsweise können die Spreizelemente 16 gebogene, eckige oder gerade verlaufende Abschnitte aufweisen, oder eine Kombination daraus. Der Zweck ist, zumindest abschnittsweise entlang der Spreizelemente 16b und 16c, einen Spreizabstand in Querrichtung Q zu erreichen zum Spreizen der auf der Transporteinrichtung 6 aufgehängten Würstchenketten 2. Der Spreizabstand wird definiert durch die Form und den Verlauf des gabelförmigen Elements 18. Dementsprechend nimmt je nach Gestaltung, insbesondere in dem gezeigten Ausführungsbeispiel der Spreizabstand in Richtung des Gabelkopfes 22, ausgehend von einem minimalen Spreizabstand, der durch die Breite, insbesondere in Querrichtung Q, des Gabelstiels 20 mit einem ersten Spreizelement 16a definiert wird, zu.

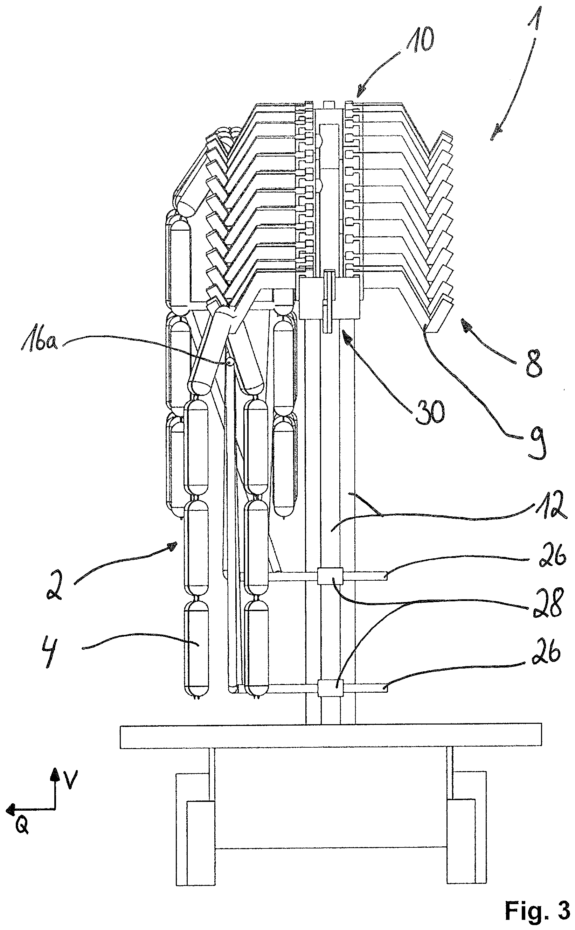

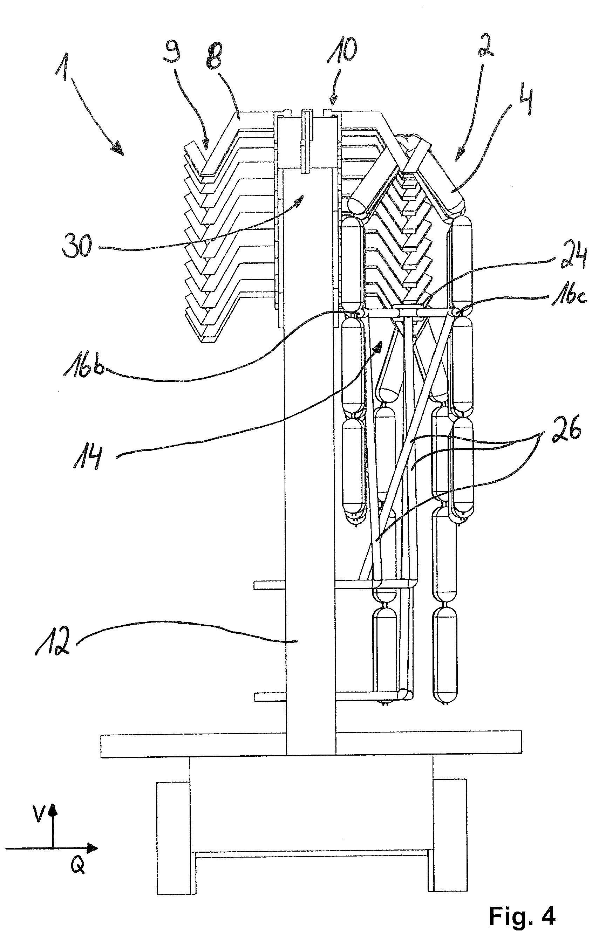

Das gabelförmige Element 18, insbesondere die Spreizelemente 16, sind mit Hilfe von Stützelementen 26 an das Maschinengestell, insbesondere im Ausführungsbeispiel an die Stützen 12 der Transporteinrichtung 6 gekoppelt, wie auch in den Fig. 3 und 4 gezeigt. Die Stützelemente 26 sind integral an den Spreizelementen 16 angeordnet. Die stabförmigen Stützelemente 26 sind, vorzugsweise mittels einer Klemmverbindung 28, an den Stützen 12 befestigt. Die Klemmverbindung 28 ist an unterschiedlichen Positionen an den Stützen 12 positionierbar, wodurch die Position des gabelförmigen Elementes 18 in vertikaler Richtung V einstellbar ist, insbesondere der vertikale Abstand des gabelförmigen Elementes 18 zu den Aufnahmehaken 8 der Transporteinrichtung 6. Die Länge der Stützelemente 26 ist mittels einer weiteren Klemmverbindung innerhalb der Klemmverbindung 28 regulierbar, wobei die Länge der Stützelemente 26 die Position der Spreizelemente 16 in der horizontalen Ebene definiert, insbesondere den Spreizabstand der Spreizelemente 16b und 16c. Durch Drehung der Stützelemente 26 um eine horizontale Achse und/oder durch Drehen der Klemmverbindung 28 um eine vertikale Achse, ist die Position des gabelförmigen Elementes 18 relativ zu der Transporteinrichtung 6 zusätzlich einstellbar.

Die Bewegungsbahn 10 verläuft teilweise entlang gekrümmter Abschnitte, vorzugsweise entlang mindestens eines Kreisbogenabschnitts 30. Der Kreisbogenabschnitt 30 ändert die Transportrichtung in dem erfindungsgemäßen Ausführungsbeispiel um vorzugsweise 180°, wobei die Richtungsänderung erfindungsgemäß auch größer oder kleiner 180° sein kann. Im Anschluss an den Kreisbogenabschnitt 30 ist das gabelförmige Element 18 angeordnet. Vorzugsweise ist das erste Spreizelement 16a des Gabelstiels 20 beginnend in einem Bereich von 180° ± 10° des Kreisbogenabschnitts 30 angeordnet. Je nach Bewegungsverhalten der Würstchenketten 2, ist dieser Bereich erfindungsgemäß individuell anpassbar.

Nachfolgend an den Kreisbogenabschnitt 30, insbesondere beim abschnittsweisen Passieren des gabelförmigen Elements 18, verläuft die Bewegungsbahn 10 mit den Aufnahmehaken 8 von einem ersten Höhenniveau B1 auf ein zweites Höhenniveau B2. Entsprechend der Bewegungsbahn 10 der Transporteinrichtung 6 verläuft das gabelförmige Element 18 zumindest abschnittsweise in vertikaler Richtung V parallel zu der Bewegungsbahn 10. Das gabelförmige Element 18 verläuft entsprechend von einem ersten Höhenniveau G1 zu einem zweiten Höhenniveau G2. Der vertikale Abstand von dem ersten Höhenniveau B1 der Bewegungsbahn 10 zu dem ersten Höhenniveau G1 des gabelförmigen Elements 18, insbesondere des Gabelstiels 20 mit dem ersten Spreizelement 16a, ist kleiner als der vertikale Abstand von dem zweiten Höhenniveau B2 der Bewegungsbahn 10 zu dem zweiten Höhenniveau G2 des gabelförmigen Elements 18, insbesondere des Gabelkopfes 22 mit dem zweiten und dem dritten Spreizelement 16b und 16c.

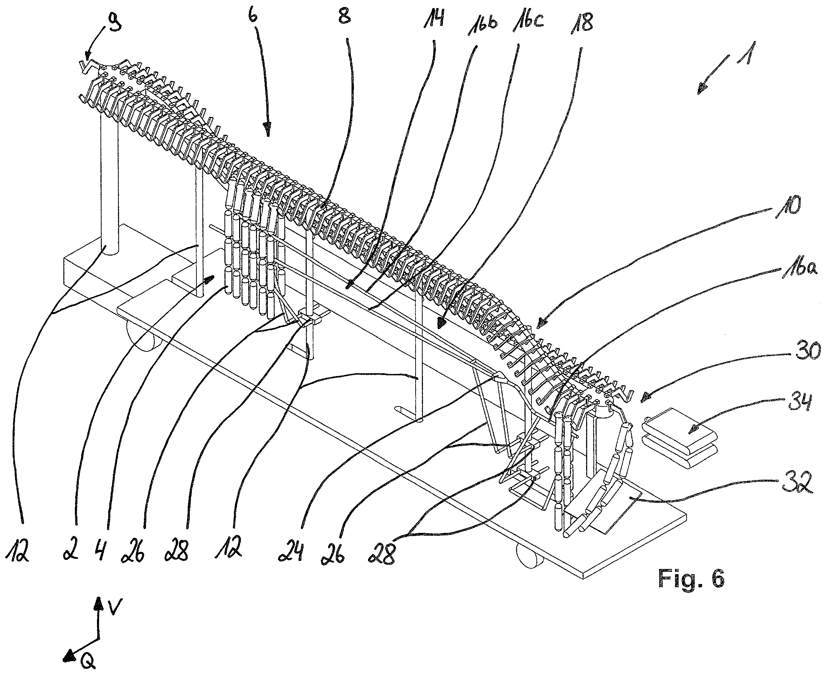

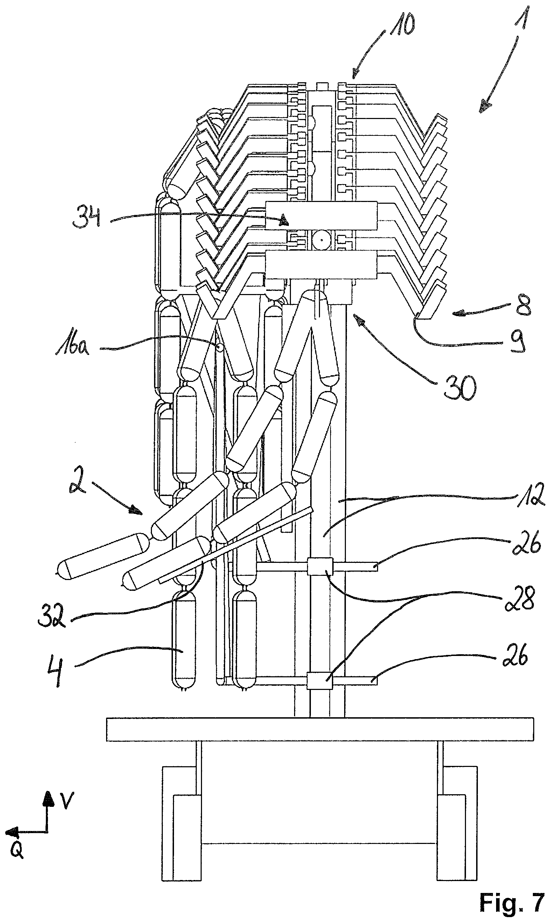

Die Figuren 6 und 7 zeigen ein zweites Ausführungsbeispiel der Aufhängevorrichtung 1. Das zweite Ausführungsbeispiel der Aufhängevorrichtung 1 entspricht im Wesentlichen dem ersten Ausführungsbeispiel und kann als Erweiterung dessen angesehen werden. Es wird daher vollumfänglich auf die Merkmale des ersten Ausführungsbeispiels Bezug genommen. Nachfolgend soll auf die Ergänzungen des zweiten Ausführungsbeispiels eingegangen werden.

Dies betrifft zum einen ein Auffangelement 32, dessen Position im Raum relativ zu der Aufhängevorrichtung 1 einstellbar ist. Vorzugsweise ist das Auffangelement 32 unterhalb des Kreisbogenabschnitts 30 angeordnet und/oder in einem abfallenden Neigungswinkel in Transportrichtung anordenbar. Das Auffangelement 32 weist vorzugsweise die Form eines Blechs auf. Das Auffangelement 32 ist dazu eingerichtet, zumindest abschnittsweise und zumindest einen Teil der Würstchenkette 2 beim Transport in seiner Bewegungsfreiheit einzuschränken.

Zum anderen ist eine weitere Ergänzung des zweiten Ausführungsbeispiels eine Übergabeeinrichtung 34. Die Übergabeeinrichtung 34 ist dazu eingerichtet, Würstchenketten 2 an die Aufhängevorrichtung 1 zu übergebenen, insbesondere an Aufnahmehaken 8 der Transporteinrichtung 6. Die Übergabeeinrichtung 34 ist vorzugsweise im Bereich des Kreisbogenabschnitts 30 der Bewegungsbahn 10 von dieser beabstandet angeordnet.

Zum Herstellen einer Spreizung bei Würstchenketten 2 mit der erfindungsgemäßen Aufhängevorrichtung 1, ist jeweils eine Würstchenkette 2 an einer Einschnürstelle der Würstchenkette 2 von jeweils einem Aufnahmehaken 8 an der Hakenkehle 9 aufzunehmen. Vorzugsweise befindet sich diese Einschnürstelle im mittleren Bereich der Würstchenkette 2, sodass die zwei freien Enden der Würstchenkette 2, die von der Hakenkehle 9 herunterhängen, im Wesentlichen gleich lang sind.

Die aufgehängten Würstchenketten 2 können nun mittels der Transporteinrichtung 6 entlang der Bewegungsbahn 10 transportiert werden. Dafür werden die Würstchenketten 2 entlang der Bewegungsbahn 10 auf die, vorzugsweise unterhalb der Aufnahmehaken 8 angeordnete, Spreizvorrichtung 14 geführt. Die Würstchenketten 2 passieren dafür zunächst das erste Spreizelement 16a. Das erste Spreizelement 16a, welches insbesondere einen Gabelstiel 20 bildet, ist vertikal beabstandet unterhalb der Hakenkehle 9, vorzugsweise parallel zu der Bewegungsbahn 10, angeordnet.

Nachstehend an das erste Spreizelement 16a sind zwei weitere in Querrichtung zueinander beabstandete, vorzugsweise V-förmig auseinanderlaufende, Spreizelemente 16b und 16c angeordnet. Beim Transport in Transportrichtung passieren die Würstchenketten 2 die Spreizelemente 16b und 16c im Anschluss an das erste Spreizelement 16a, das mittels eines Verbindungselementes 24 an die Spreizelemente 16b und 16c verbundenen ist. Infolgedessen werden die Würstchenketten 2 beim Transport entlang der Spreizelemente 16b und 16c auseinandergespreizt.

Zwischen den Spreizelementen 16b und 16c ist nachfolgend ein Rauchstock entlang einer Führungseinrichtung einzuführen. Die Würstchenketten 2 können dann für die weitere Verarbeitung auf den Rauchstock abgeworfen und aus der Aufhängevorrichtung ausgeführt werden. Der Rauchstock und die Führungseinrichtung sind in den Figuren nicht gezeigt.

Zur Erzielung einer optimierten Spreizwirkung kann die Position der Spreizvorrichtung 14 relativ zu der Transporteinrichtung 6 verändert werden:
Je nach Würstchenkettenlänge, bzw. der Länge der freien Enden der Würstchenkette 2, ist der vertikale Abstand der Spreizvorrichtung 14 zu den Aufnahmehaken 8, insbesondere zu den Hakenkehlen 9, einzustellen. Der vertikale Abstand ist mithilfe der Klemmverbindung 28 an den Stützen 12 einstellbar.

Des Weiteren ist in Abhängigkeit von der Würstchengeometrie, d.h. insbesondere der Würstchendicke und der Würstchenlänge, sowie der Würstchenkettenlänge, die Position, insbesondere des ersten Spreizelementes 16a relativ zu der Bewegungsbahn 10 der Transporteinrichtung 6, und der Spreizabstand der Spreizelemente 16b und 16c einzustellen. Der Spreizabstand ist zum einen über die Form der Spreizelemente 16 wählbar. Zum anderen kann der Spreizabstand und die Position der Spreizelemente 16 mit der Klemmverbindung 28 der Stützelemente 26 reguliert werden.

Das Führen der Würstchenketten 2 auf das erste Spreizelement 16a kann durch einen vorgelagerten Kreisbogenabschnitt 30 der Bewegungsbahn 10 optimiert werden. Hierfür ist das Auffangelement 32 unterhalb des Kreisbogenabschnitts 30 anzuordnen. Die vertikale und horizontale Position des Auffangelementes 32 relativ zu den Aufnahmehaken 8 ist so einzustellen, dass ein freies Ende einer Würstchenkette 2, insbesondere das innerhalb des Kreisbogenabschnitts 30 innen hängende freie Ende der Würstchenkette 2, beim Passieren des Kreisbogenabschnitts 30, das Auffangelement 32 abschnittsweise berührt. Das vorzugsweise innen hängende freie Ende der Würstchenkette 2 wird demnach von dem Auffangelement 32 abschnittsweise durch Reibkräfte von der Transportbewegung zurückgehalten. Das vorzugsweise außen hängende freie Ende der Würstchenkette 2 bleibt in seiner Bewegung frei, d.h. es berührt das Auffangelement 32 vorzugsweise nicht. Die Spaltgeometrie wird durch diesen Effekt abschnittsweise innerhalb des Kreisbogenabschnitts 30 erweitert. Dieser Effekt wird durch die auf das außen hängende freie Ende wirkenden Fliehkräfte innerhalb des Kreisbogenabschnitts 30 verstärkt. D.h., die Spaltgeometrie zwischen den freien Enden der Würstchenkette 2 wird vergrößert, wodurch das Führen des Spalts auf das erste Spreizelement 16a optimiert wird. Das erste Spreizelement 16a ist demnach beginnend im in Transportrichtung liegenden Endbereich des Kreisbogenabschnitts 30 anzuordnen.

### Bezugszeichenliste:

- 1: Aufhängevorrichtung
- 2: Würstchenkette
- 4: Würstchen
- 6: Transporteinrichtung
- 8: Aufnahmehaken
- 9: Hakenkehle
- 10: Bewegungsbahn
- 12: Stütze
- 14: Spreizvorrichtung
- 16: Spreizelement (16a, 16b, 16c)
- 18: gabelförmiges Element
- 20: Gabelstiel
- 22: Gabelkopf
- 24: Verbindungselement
- 26: Stützelemente
- 28: Klemmverbindung
- 30: Kreisbogenabschnitt
- 32: Auffangelement
- 34: Übergabeeinrichtung

- B1: erstes Höhenniveau der Bewegungsbahn
- B2: zweites Höhenniveau der Bewegungsbahn
- G1: erstes Höhenniveau des gabelförmigen Elements
- G2: zweites Höhenniveau des gabelförmigen Elements

- Q: Querrichtung
- V: vertikale Richtung

## Patentansprüche

1. Aufhängevorrichtung (1) zum Aufhängen und Transportieren von mindestens einer Würstchenkette (2), umfassend
- eine Transporteinrichtung (6) zum Transportieren der mindestens einen Würstchenkette (2), welche mindestens einen mittels einer Führungs- und Antriebseinrichtung entlang einer Bewegungsbahn (10) bewegbaren Aufnahmehaken (8) zum Aufnehmen der Würstchenkette (2) aufweist,
- eine ortsfest relativ zu der Transporteinrichtung (6) angeordnete Spreizvorrichtung (14) zum Spreizen der Würstchenkette (2), welche mindestens ein benachbart zur Bewegungsbahn (10) des Aufnahmehakens (8) angeordnetes Spreizelement (16) aufweist,
**dadurch gekennzeichnet, dass** das Spreizelement im Betrieb derart auf die von dem Aufnahmehaken (8) getragene Würstchenkette (2) einwirkt, dass die Würstchenkette (2) durch Nutzung der Bewegung der Würstchenkette (2) beim Transport entlang der Bewegungsbahn (10) der Transporteinrichtung (6) gespreizt wird wobei die Führungs- und Antriebseinrichtung für den Aufnahmehaken (8) so ausgebildet ist, dass dessen Bewegungsbahn (10) zumindest abschnittsweise gekrümmt ist, und sich entlang eines Kreisbogenabschnitts (30) erstreckt, wobei die Spreizvorrichtung (14) wenigstens teilweise im Bereich des Kreisbogenabschnitts (30), insbesondere anschließend an ein Ende des Kreisbogenabschnitts (30), angeordnet ist zum Führen der Würstchenkette (2) auf die Spreizvorrichtung (14).

2. Aufhängevorrichtung (1) nach Anspruch 1,
**dadurch gekennzeichnet, dass** im Bereich des gekrümmten Abschnitts, insbesondere des Kreisbogenabschnitts (30), insbesondere vertikal unterhalb der Transporteinrichtung (6), ein Auffangelement (32) oder -blech angeordnet ist, welches im Betrieb mindestens ein Würstchen (4) oder einen Teil der Würstchenkette (2) an einer Auslenkung aufgrund von Fliehkräften hindert.

3. Aufhängevorrichtung (1) nach Anspruch 1,
wobei im Bereich eines gekrümmten Abschnitts der Bewegungsbahn (10), insbesondere vertikal unterhalb der Transporteinrichtung (6), ein Auffangelement (32) oder -blech angeordnet ist, welches im Betrieb mindestens ein Würstchen (4) oder einen Teil der Würstchenkette (2) an einer Auslenkung aufgrund von Fliehkräften hindert,
**dadurch gekennzeichnet, dass** das Auffangelement (32) und die Transporteinrichtung (6) derart zusammenwirken, dass
a) ein vertikaler Abstand zwischen Auffangelement (32) und Transporteinrichtung (6) eingestellt wird, wobei der vertikale Abstand so gewählt ist, dass
b) ein erstes freies Ende einer Würstchenkette (2) in einer Transportrichtung entlang der Bewegungsbahn (10), insbesondere eines innerhalb des Kreisbogenabschnitts (30) innen hängenden Würstchens (4), einer Würstchenkette (2) zumindest abschnittsweise eine reib- oder formschlüssige Verbindung mit dem Auffangelement (32) eingeht, und
c) ein zweites freies Ende einer Würstchenkette (2) in der Transportrichtung (T) entlang der Bewegungsbahn (10), insbesondere eines innerhalb des Kreisbogenabschnitts (30) außen hängenden Würstchens (4), einer Würstchenkette (2) frei bewegbar ist.

4. Aufhängevorrichtung (1) nach mindestens einem der vorstehenden Ansprüche, **dadurch gekennzeichnet, dass** die Spreizvorrichtung (14) im Wesentlichen unterhalb der Bewegungsbahn (10) des Aufnahmehakens (8) angeordnet ist.

5. Aufhängevorrichtung (1) nach mindestens einem der vorstehenden Ansprüche, **dadurch gekennzeichnet, dass** das mindestens eine Spreizelement (16) wenigstens teilweise gekrümmt ist.

6. Aufhängevorrichtung (1) nach mindestens einem der vorstehenden Ansprüche, **dadurch gekennzeichnet, dass** die Spreizvorrichtung (14) mehrere stab- oder schienenförmige Spreizelemente (16) umfasst, wobei ein erstes Spreizelement (16a) in eine Transportrichtung vor einem zweiten und einem dritten Spreizelement (16b, 16c) angeordnet ist, wobei das erste Spreizelement (16a) zumindest abschnittsweise parallel zu der Bewegungsbahn (10) angeordnet ist.

7. Aufhängevorrichtung (1) nach mindestens einem der vorstehenden Ansprüche, **dadurch gekennzeichnet, dass** mindestens zwei Spreizelemente (16b, 16c) zumindest abschnittsweise beabstandet zueinander angeordnet sind, wobei der Abstand in eine Querrichtung (Q), die sich horizontal und orthogonal zu einer Transportrichtung erstreckt, zumindest abschnittweise in Transportrichtung zunimmt.

8. Aufhängevorrichtung (1) nach Anspruch 7,
**dadurch gekennzeichnet, dass** der Abstand der Spreizelemente (16b, 16c) in Querrichtung (Q) zumindest abschnittweise einstellbar ist, und/oder. dass die Spreizvorrichtung (14) relativ zu dem Aufnahmehaken (8) zumindest abschnittsweise vertikal beabstandet ist, wobei der vertikale Abstand variabel einstellbar ist, bevorzugt in einem Bereich zwischen 0 mm und 300 mm, besonders bevorzugt in einem Bereich von 10 mm bis 100 mm, und/oder. dass die Führungs- und Antriebseinrichtung für den Aufnahmehaken (8) so ausgebildet ist, dass dessen Bewegungsbahn (10) zumindest abschnittsweise einen Höhenunterschied aufweist mit einem ersten Höhenniveau (B1) und einem zweiten Höhenniveau (B2), und/oder dass zumindest ein Teil der Spreizvorrichtung (14) in eine Transportrichtung verstellbar und in verschiedenen Positionen feststellbar ist.

9. Aufhängevorrichtung (1) nach mindestens einem der vorstehenden Ansprüche, **dadurch gekennzeichnet, dass** die Spreizvorrichtung (14) mit einer Rauchstock-Führungseinrichtung zum Führen eines Rauchstocks zusammenwirkt, wobei die Rauchstock-Führungseinrichtung benachbart zu der Spreizvorrichtung (14) angeordnet ist.

10. Aufhängevorrichtung (1) nach mindestens einem der vorstehenden Ansprüche, **dadurch gekennzeichnet, dass** die Spreizvorrichtung (14) an eine Zuführfördervorrichtung gekoppelt ist zum automatischen Zuführen eines Rauchstocks in die Spreizvorrichtung (14), insbesondere entlang der Rauchstock-Führungseinrichtung.

11. Verfahren zur Spreizung von mindestens einer Würstchenkette (2) mittels einer Aufhängevorrichtung (1) nach mindestens einem der vorstehenden Ansprüche,
mit den Schritten:
- Aufnehmen der Würstchenkette (2) mittels mindestens einem Aufnahmehaken (8) einer Transporteinrichtung (6),
- Transportieren der Würstchenkette (2) entlang einer Bewegungsbahn (10) mit dem Aufnahmehaken (8) der Transporteinrichtung (6),
- Spreizen der Würstchenkette (2) an der Transporteinrichtung (6) mittels einer ortsfest angeordneten Spreizvorrichtung (14) durch Nutzung der Bewegung der Würstchenkette (2),

12. Verfahren nach Anspruch 11,
mit dem Schritt:
- Einstellen eines vertikalen Abstands der Spreizvorrichtung (14) relativ zu der Transporteinrichtung (6).

13. Verfahren nach Anspruch 11 oder 12,
wobei die Spreizvorrichtung (14) ferner mehrere stabförmige Spreizelemente (16) umfasst, wobei ein erstes Spreizelement (16a) in eine Transportrichtung vor einem zweiten und einem dritten Spreizelement (16b, 16c) angeordnet ist, wobei das erste Spreizelement (16a) zumindest abschnittsweise parallel zu der Bewegungsbahn (10) angeordnet ist.,
mit den Schritten:
- Einstellen eines horizontalen Abstands von mindestens zwei der stabförmigen Elemente (16b, 16c),
- Justieren der Spreizvorrichtung (14), insbesondere des ersten Spreizelementes (16a) anschließend an ein Ende eines Kreisbogenabschnitts (30) der Bewegungsbahn (10).

14. Verfahren nach einem der Ansprüche 11 bis 13,
wobei die Vorrichtung ferner ein Auffangelement (32) aufweist,
mit den Schritten:
- Positionieren des Auffangelements (32) unterhalb der Transporteinrichtung (6) im Bereich des Kreisbogenabschnitts (30),
-
a) Einstellen eines vertikalen Abstands des Auffangelements (32) relativ zu der Transporteinrichtung (6) entsprechend einer vertikalen Länge der hängenden Würstchenkette (2), wobei der Abstand so gewählt ist, dass
b) ein erstes freies Ende einer Würstchenkette (2) in eine Transportrichtung entlang der Bewegungsbahn (10), insbesondere eines innerhalb des Kreisbogenabschnitts (30) innen hängenden Würstchens, einer Würstchenkette (2) zumindest abschnittsweise eine Verbindung mit dem Auffangelement (32) eingeht, und
c) ein zweites freies Ende einer Würstchenkette (2) in der Transportrichtung entlang der Bewegungsbahn (10), insbesondere eines innerhalb des Kreisbogenabschnitts (30) außen hängenden Würstchens (4), einer Würstchenkette (2) frei bewegbar ist.

15. Verfahren nach einem der Ansprüche 11 bis 14,
wobei die Vorrichtung ferner einen Rauchstock und eine Führungseinrichtung zum Führen eines Rauchstocks aufweist, wobei die Führungseinrichtung benachbart zu der Spreizvorrichtung (14) angeordnet ist,
mit den Schritten:
- Einführen des Rauchstocks zwischen der Würstchenkette (2) unterhalb des Aufnahmehakens (8) der Transporteinrichtung (6), insbesondere entlang der Führungseinrichtung,
- Abwerfen der Würstchenkette (2) von dem Aufnahmehaken (8) auf den Rauchstock,
- Ausführen des Rauchstocks aus der Transporteinrichtung (6).

## Claims

1. A suspension apparatus (1) for hanging up and transporting at least one sausage string (2) including
- a transport device (6) for transporting the at least one sausage string (2), that has at least one carrier hook (8) for carrying the sausage string (2), the hook being movable along a path of movement (10) by means of a guide and drive device,
- a spreading device (14) arranged stationarily relative to the transport device (6) for spreading the sausage string (2), that has at least one spreading element (16) which is arranged adjacent to the path of movement (10) of the carrier hook (8) and which in operation acts on the sausage string (2) carried by the carrier hook (8) in such a way that the sausage string (2) is spread,
**characterised in that** the guide and drive device for the carrier hook (8) is so designed that the path of movement (10) thereof is at least portion-wise curved and in particular extends along an arcuate portion (30), wherein the spreading device (14) is arranged at least partially in the region of the arcuate portion (30), in particular adjoining an end of the arcuate portion (30), for guiding the sausage string (2) on to the spreading device (14).

2. A suspension apparatus (1) as set forth in the classifying portion of claim 1,
**characterised in that** disposed in the region of the curved portion, in particular the arcuate portion (30), in particular vertically below the transport device (6), is a catch element (30) or plate which in operation prevents at least one sausage (4) or a part of the sausage string (2) from being deflected by virtue of centrifugal forces.

3. A suspension apparatus (1) as set forth in claim 1,
wherein disposed in the region of the curved portion, in particular the arcuate portion (30), in particular vertically below the transport device (6), is a catch element (30) or plate which in operation prevents at least one sausage (4) or a part of the sausage string (2) from being deflected by virtue of centrifugal forces,
**characterised in that** the catch element (32) and the transport device (6) co-operate in such a way that
a) a vertical spacing between the catch element (32) and the transport device (6) is set, wherein the vertical spacing is so selected that
b) a first free end of a sausage string (2) in a transport direction along the path of movement (10), in particular a sausage (4) hanging inwardly within the arcuate portion (30), of a sausage string (2) is at least portion-wise in frictional or positively locking connection to the catch element (32), and
c) a second free end of a sausage string (2) is freely movable in the transport direction (T) along the path of movement (10), in particular a sausage (4) hanging outwardly within the arcuate portion (30) of a sausage string (2).

4. A suspension apparatus (1) as set forth in at least one of the preceding claims
**characterised in that** the spreading device (14) is arranged substantially beneath the path of movement (10) of the carrier hook (8).

5. A suspension apparatus (1) as set forth in at least one of the preceding claims
**characterised in that** the at least one spreading element (16) is at least partially curved.

6. A suspension apparatus (1) as set forth in at least one of the preceding claims
**characterised in that** the spreading device (14) includes a plurality of bar-shaped or rail-shaped spreading elements (16), wherein a first spreading element (16a) is arranged in a transport direction before a second and a third spreading element (16b, 16c), wherein the first spreading element (16a) is arranged at least portion-wise parallel to the path of movement (10).

7. A suspension apparatus (1) as set forth in at least one of the preceding claims
**characterised in that** at least two spreading elements (16b, 16c) are arranged at least portion-wise in mutually spaced relationship, wherein the spacing increases at least portion-wise in the transport direction in a transverse direction (Q) extending horizontally and orthogonally to the transport direction.

8. A suspension apparatus (1) as set forth in claim 7
**characterised in that** the spacing of the spreading elements (16b, 16c) is at least portion-wise adjustable in the transverse direction (Q), and/or
that the spreading device (14) is spaced at least portion-wise vertically relative to the carrier hook (8), wherein the vertical spacing is variably adjustable, preferably in a range between 0 mm and 300 mm, particularly preferably in a range of 10 mm through 100 mm, and/or
that the guide and drive device for the carrier hook (8) is so designed that the path of movement (10) thereof at least portion-wise has a difference in height with a first height level (B1) and a second height level (B2), and/or
that at least a part of the spreading device (14) is adjustable in a transport direction and can be fixed in different positions.

9. A suspension apparatus (1) as set forth in at least one of the preceding claims
**characterised in that** the spreading device (14) co-operates with a smoke stick guide device for guiding a smoke stick, the smoke stick guide device being arranged adjacent to the spreading device (14).

10. A suspension apparatus (1) as set forth in at least one of the preceding claims
**characterised in that** the spreading device (14) is coupled to a feed conveyor device for automatically feeding a smoke stick into the spreading device (14), in particular along the smoke stick guide device.

11. A method of spreading at least one sausage string (2) by means of a suspension apparatus (1), preferably as set forth in at least one of the preceding claims, comprising the steps:
- receiving the sausage string (2) by means of at least one carrier hook (8) of a transport device (6),
- transporting the sausage string (2) along a path of movement (10) with the carrier hook (8) of the transport device (6), and
- spreading the sausage string (2) on the transport device (6) by means of a stationarily arranged spreading device (14), preferably a spreading device (14) having the features of preceding claims 1 through 10.

12. A method as set forth in claim 11 comprising the step:
- setting a vertical spacing of the spreading device (14) relative to the transport device (6).

13. A method as set forth in claim 11 or claim 12,
wherein the spreading device (14) further includes a plurality of spreading elements (16), comprising the steps:
- setting a horizontal spacing of at least two of the bar-shaped elements (16b, 16c),
- adjusting the spreading device (14), in particular the first spreading element (16a) adjoining an end of the arcuate portion (30) of the path of movement (10).

14. A method as set forth in one of claims 11 through 13,
wherein the apparatus further has a catch element (32),
comprising the steps:
- positioning the catch element (32) beneath the transport device (6) in the region of the arcuate portion (30),
-
a) setting a vertical spacing of the catch element (32) relative to the transport device (6) corresponding to a vertical length of the hanging sausage string (2), wherein the spacing is so selected that
b) a first free end of a sausage string (2) in a transport direction along the path of movement (10), in particular a sausage (4) hanging inwardly within the arcuate portion (30), of a sausage string (2) at least portion-wise involves a connection to the catch element (32), and
c) a second free end of a sausage string (2) is freely movable in the transport direction (T) along the path of movement (10), in particular a sausage (4) hanging outwardly within the arcuate portion (30) of a sausage string (2).

15. A method as set forth in one of claims 11 through 14,
wherein the apparatus further has a smoke stick and a guide device for guiding a smoke stick, the guide device being arranged adjacent to the spreading device (14),
comprising the steps:
- introducing the smoke stick between the sausage string (2) beneath the carrier hook (8) of the transport device (6), in particular along the guide device,
- ejecting the sausage string (2) from the carrier hook (8) on to the smoke stick, and
- exiting the smoke stick from the transport device (6).

## Revendications

1. Dispositif de suspension (1) destiné à suspendre et à transporter au moins une chaîne de saucisses (2), comprenant
- un système de transport (6) destiné à transporter l'au moins une chaîne de saucisses (2), lequel présente au moins un crochet de réception (8) pouvant être déplacé le long d'une voie de déplacement (10) au moyen d'un système de guidage et d'entraînement, destiné à recevoir la chaîne de saucisses (2),
- un dispositif d'écartement (14) disposé de manière stationnaire par rapport au système de transport (6), destiné à écarter la chaîne de saucisses (2), lequel présente au moins un élément d'écartement (16) disposé de manière adjacente par rapport à la voie de déplacement (10) du crochet de réception (8),
**caractérisé en ce que** l'élément d'écartement agit en fonctionnement de telle manière sur la chaîne de saucisses (2) supportée par le crochet de réception (8) que la chaîne de saucisses (2) est écartée par l'utilisation du déplacement de la chaîne de saucisses (2) lors du transport le long de la voie de déplacement (10) du système de transport (6), dans lequel le système de guidage et d'entraînement pour le crochet de réception (8) est réalisé de telle sorte que sa voie de déplacement (10) est au moins par endroits incurvée et s'étend le long d'une section d'arc de cercle (30), dans lequel le dispositif d'écartement (14) est disposé au moins en partie dans la zone de la section d'arc de cercle (30), en particulier dans le prolongement d'une extrémité de la section d'arc de cercle (30) pour guider la chaîne de saucisses (2) sur le dispositif d'écartement (14).

2. Dispositif de suspension (1) selon la revendication 1,
**caractérisé en ce qu'**est disposé, dans la zone de la section incurvée, en particulier de la section d'arc de cercle (30), en particulier de manière verticale sous le système de transport (6), un élément collecteur (32) ou une tôle de collecte, lequel/laquelle empêche, en fonctionnement, au moins une saucisse (4) ou une partie de la chaîne de saucisses (2) de dévier en raison des forces centrifuges.

3. Dispositif de suspension (1) selon la revendication 1,
dans lequel un élément collecteur (32) ou une tôle de collecte est disposé/disposée dans la zone d'une section incurvée de la voie de déplacement (10), en particulier de manière verticale sous le système de transport (6), lequel/laquelle empêche, en fonctionnement, au moins une saucisse (4) ou une partie de la chaîne de saucisses (2) de dévier en raison des forces centrifuges,
**caractérisé en ce que** l'élément collecteur (32) et le système de transport (6) coopèrent de telle manière que
a) une distance verticale entre l'élément collecteur (32) et le système de transport (6) est réglée, dans lequel la distance verticale est choisie de telle sorte que
b) une première extrémité libre d'une chaîne de saucisses (2) dans une direction de transport le long de la voie de déplacement (10), en particulier d'une saucisse (4), suspendue côté intérieur à l'intérieur de la section d'arc de cercle (30), d'une chaîne de saucisses (2) va de pair au moins par endroits avec une liaison par friction ou à complémentarité de forme à l'élément collecteur (32), et
c) une seconde extrémité libre d'une chaîne de saucisses (2) dans la direction de transport (T) le long de la voie de déplacement (10), en particulier d'une saucisse (4), suspendue côté extérieur à l'intérieur de la section d'arc de cercle (30), d'une chaîne de saucisses (2), peut être déplacée librement.

4. Dispositif de suspension (1) selon au moins l'une quelconque des revendications précédentes, **caractérisé en ce que** le dispositif d'écartement (14) est disposé sensiblement sous la voie de déplacement (10) du crochet de réception (8).

5. Dispositif de suspension (1) selon au moins l'une quelconque des revendications précédentes, **caractérisé en ce que** l'au moins un élément d'écartement (16) est incurvé au moins en partie.

6. Dispositif de suspension (1) selon au moins l'une quelconque des revendications précédentes,
**caractérisé en ce que** le dispositif d'écartement (14) comprend plusieurs éléments d'écartement (16) en forme de barre ou de rail, dans lequel un premier élément d'écartement (16a) est disposé dans une direction de transport devant un deuxième et un troisième élément d'écartement (16b, 16c), dans lequel le premier élément d'écartement (16a) est disposé au moins par endroits de manière parallèle à la voie de déplacement (10).

7. Dispositif de suspension (1) selon au moins l'une quelconque des revendications précédentes,
**caractérisé en ce qu'**au moins deux éléments d'écartement (16b, 16c) sont disposés au moins par endroits de manière espacée l'un par rapport à l'autre, dans lequel la distance dans une direction transversale (Q), qui s'étend de manière horizontale et de manière orthogonale par rapport à une direction de transport, augmente au moins par endroits dans la direction de transport.

8. Dispositif de suspension (1) selon la revendication 7,
**caractérisé en ce que** la distance des éléments d'écartement (16b, 16c) dans la direction transversale (Q) peut être réglée au moins par endroits, et/ou que le dispositif d'écartement (14) est tenu à distance au moins par endroits de manière verticale par rapport au crochet de réception (8), dans lequel la distance verticale peut être réglée de manière variable, de manière préférée dans une plage entre 0 mm et 300 mm, de manière particulièrement préférée dans une plage de 10 mm à 100 mm, et/ou que le système de guidage et d'entraînement pour le crochet de réception (8) est réalisé de telle sorte que sa voie de déplacement (10) présente au moins par endroits une différence de hauteur avec un premier niveau en hauteur (B1) et un deuxième niveau en hauteur (B2), et/ou qu'au moins une partie du dispositif d'écartement (14) peut être ajustée dans une direction de transport et peut être fixée dans différentes positions.

9. Dispositif de suspension (1) selon au moins l'une quelconque des revendications précédentes,
**caractérisé en ce que** le dispositif d'écartement (14) coopère avec un système de guidage de bâton de fumoir destiné à guider un bâton de fumoir, dans lequel le système de guidage de bâton de fumoir est disposé de manière adjacente par rapport au dispositif d'écartement (14).

10. Dispositif de suspension (1) selon au moins l'une quelconque des revendications précédentes,
**caractérisé en ce que** le dispositif d'écartement (14) est couplé à un dispositif de convoyage d'alimentation destiné à amener automatiquement un bâton de fumoir dans le dispositif d'écartement (14), en particulier le long du système de guidage de bâton de fumoir.

11. Procédé d'écartement d'au moins une chaîne de saucisses (2) au moyen d'un dispositif de suspension (1) selon au moins l'une quelconque des revendications précédentes, avec les étapes :
- de réception de la chaîne de saucisses (2) au moyen d'au moins un crochet de réception (8) d'un système de transport (6),
- de transport de la chaîne de saucisses (2) le long d'une voie de déplacement (10) avec le crochet de réception (8) du système de transport (6),
- d'écartement de la chaîne de saucisses (2) sur le système de transport (6) au moyen d'un dispositif d'écartement (14) disposé de manière stationnaire en utilisant le déplacement de la chaîne de saucisses (2).

12. Procédé selon la revendication 11,
avec l'étape :
- de réglage d'une distance verticale du dispositif d'écartement (14) par rapport au système de transport (6).

13. Procédé selon la revendication 11 ou 12,
dans lequel le dispositif d'écartement (14) comprend en outre plusieurs éléments d'écartement (16) en forme de barre, dans lequel un premier élément d'écartement (16a) est disposé dans une direction de transport devant un deuxième et un troisième élément d'écartement (16b, 16c), dans lequel le premier élément d'écartement (16a) est disposé au moins par endroits de manière parallèle par rapport à la voie de déplacement (10),
avec les étapes :
- de réglage d'une distance horizontale d'au moins deux des éléments en forme de barre (16b, 16c),
- d'ajustement du dispositif d'écartement (14), en particulier du premier élément d'écartement (16a) dans le prolongement d'une extrémité d'une section d'arc de cercle (30) de la voie de déplacement (10).

14. Procédé selon l'une quelconque des revendications 11 à 13,
dans lequel le dispositif présente en outre un élément collecteur (32),
avec les étapes :
- de positionnement de l'élément collecteur (32) sous le système de transport (6) dans la zone de la section d'arc de cercle (30),
-
a) de réglage d'une distance verticale de l'élément collecteur (32) par rapport au système de transport (6) de manière à correspondre à une longueur verticale de la chaîne de saucisses (2) suspendue, dans lequel la distance est choisie de telle sorte que
b) une première extrémité libre d'une chaîne de saucisses (2) dans une direction de transport le long de la voie de déplacement (10), en particulier d'une saucisse suspendue côté intérieur à l'intérieur de la section d'arc de cercle (30) d'une chaîne de saucisses (2), va de pair au moins par endroits avec une liaison à l'élément collecteur (32),
et
c) une deuxième extrémité libre d'une chaîne de saucisses (2) dans la direction de transport le long de la voie de déplacement (10), en particulier d'une saucisse (4), suspendue côté extérieur à l'intérieur de la section d'arc de cercle (30), d'une chaîne de saucisses (2), peut être déplacée librement.

15. Procédé selon l'une quelconque des revendications 11 à 14,
dans lequel le dispositif présente en outre un bâton de fumoir et un système de guidage destiné à guider un bâton de fumoir, dans lequel le système de guidage est disposé de manière adjacente au dispositif d'écartement (14),
avec les étapes :
- d'introduction du bâton de fumoir entre la chaîne de saucisses (2) sous le crochet de réception (8) du système de transport (6), en particulier le long du système de guidage
- de jet de la chaîne de saucisses (2) depuis le crochet de réception (8) sur le bâton de fumoir
- d'évacuation du bâton de fumoir hors du système de transport (6).
